# EUROPEAN PATENT SPECIFICATION

(11) **EP 2 437 211 B1**
(45) Date of publication and mention of the grant of the patent: **25.03.2015**
(21) Application number: 11172973.7
(22) Date of filing: 21.07.2006
(51) Int. Cl.: G06Q 10/02, G06Q 10/04

(54) **Method and system of building actual travel fares**
Verfahren und System zum Erstellen von tatsächlichen Reisekosten
Procédé et système pour fabriquer des coûts de trajet

(30) Priority: 29.07.2005 US 703473 P; 29.07.2005 EP 05107022
(43) Date of publication of application: 04.04.2012
(62) Divisional of application: 06777883.7
(73) Proprietor: Amadeus S.A.S., 06410 Biot (FR)
(72) Inventor: Patoureaux, Marc, 06130 GRASSE (FR); Dufresne, Thierry, 06650 OPIO (FR); Chaumont, Gilles, 06560 VALBONNE (FR); Dourthe, Cédric, 06000 NICE (FR); Blazka, Thierry, 06410 BIOT (FR)
(74) Representative: Decobert, Jean-Pascal

(56) References cited:
- WO-A-01/63456
- WO-A-01/75741
- US-A- 5 177 684
- US-A- 5 781 906
- US-B1- 6 336 097
- US-B1- 6 381 578

## Description

### FIELD OF THE INVENTION

The present invention relates generally to computerized travel planning systems and refers more particularly to a method and a system that allow to efficiently extract actual travel fares so as a large number of bookable opportunities can be proposed to a customer.

### BACKGROUND OF THE INVENTION

The planning of a trip especially, an air trip, is generally done on the basis of the selection of the origin and destination town airports and the setting of departure and return dates. This is the case whichever planning is done by a travel agency or directly by the customer. In which case this latter has just to access any of the specialized Web sites, that many tour operators and airline carriers have put together on the Internet to advertise their travel offerings and holiday stays, in an attempt to sell them without any third-party involved. Indeed, most of the airline companies offer now the possibility to book and buy an airline ticket from their Web server. In which case the ticket is most often 'dematerialized' since no real ticket is ever issued and customer has just to show up to the airport airline counter with an ID e.g., a passport, to get its boarding pass.

If it is just that easy to book a trip or a holiday, the customer cannot be certain however that he has obtained the best possible offer or the one that would have best fit his preferences. If most people, if not all, that travel for business, are committed to arrive and depart at precise dates knowing, often well in advance, exactly where and when they have to be for their professional appointments, corporate meetings, conferences or seminars of all sorts it remains that a good deal of the clientele of travel agencies have no such constraints. In fact, many of their customers see as an inconvenience to have to set precise dates for their trips and are even not sure sometimes about the destination.

As an example of this, a travel agent customer may express the desire of visiting the north-east part of the American continent at fall, that is, during the so-called Indian summer which is famous because of the changing color of tree leaves or fall foliage. It may be as well interesting for such a customer to arrive in Boston, New-England, in New-York or even in Montreal, Quebec as long as the travel agent can get a reservation at an interesting price in a flexible range of dates that the customer is ready to accept.

Others may even express looser requirements and would like to only specify a theme for their travel destinations or holiday. Those that are fond of, say, ancient civilizations may want to consider in their request destinations as different as Egypt and its pyramids, Mexico and the pre-colombian civilizations or the temples in Angkor, Cambodia.

If partial solutions have been proposed to handle this type of queries, some are discussed hereafter; this is not possible with the software products that travel agencies are currently equipped with. This demands a great deal of flexibility in the specification of dates and destinations that current products just do not support. At this point it must be clearly understood that the objective is to actually book a trip and not only to consider potential travel opportunities that may reveal later not to be available e.g., because they are already fully booked for the period considered, or because they have been cancelled.

Products to help a client to make a choice already exist. For example one may refer to a patent application to USPTO (US Patent and Trademark Office), publication number US20020091535, which describes a method and a system to help in the selection of a holiday destination and where no destination has to be specified in a first place. However, this does not provide any form of guarantee that the choices of destination and stay performed by the customer are actually bookable.

In order that the customer may gather enough information on the actual availability of flights for multiples destinations, and in a certain range of dates, it will be necessary to issue as many different queries to the reservation system as there are destinations and days to consider. All returned information must be carefully logged for a manual comparison. Even though some systems have introduced a certain level of flexibility especially, in proposing automatically dates close to the ones specified in case of non-availability on the specific day requested, the search of the best solution is always time-consuming, boring and requires a great deal of dedication from the travel agent. Also, the skill of this latter may not be such that he will be able to actually find all solutions that are susceptible to satisfy a customer request.

A brute-force way of getting around these difficulties would be to precompute all combinations of origins and destinations fares. Because of the number of combinations, enumerating and storing all possibilities would require however an enormous amount of resources that cannot be realistically implemented. Indeed, if one considers only the case of the airlines, there are about 3600 towns in the world that have at least one airport and associated commercial flights. Two hundred carriers or so are referenced in the reservation databases. At least ten tariffs exist for each pair of origin and destination airports. Also, ten passenger types can be defined (child, adult, seniors etc.) Hence, billions of combinations would have to be recorded. If not an impossible task this would not be economically realistic.

Without going that far, systems have been however proposed which attempt to compute a large number of combinations. This is for example what is described in US patent 6,336,097 teaching a method for constructing large numbers of travel fares between groups of towns, origins and destinations. The computing method is based on the use of tariff matrices, some multidimensional and sophisticated data structures which demand, to be carried out, an important computing power and the corresponding active memory resources. When in peak periods hundreds, if not thousands of remote users may want to access a reservation system simultaneously the risk of exhausting its computing capability, until it collapses, is becoming high unless to implement huge and expensive resources that will be in general under used.

### OBJECT OF THE INVENTION

It is thus a broad object of the invention of expediting the building of actual i.e., bookable travel fares on standard, state-of-the-art, computers.

It is another object of the invention to permit that many destinations can be handled in the elapsed time of a single end-user request.

It is still another object of the invention of enabling travel planning system to offer thematic travel options to their end-users so that they have no particular destination to choose from to start planning a trip.

It is yet another object of the invention that the selected fare paths be the less expensive among the set of possible fare paths.

Further objects, features and advantages of the present invention will become apparent to the ones skilled in the art upon examination of the following description in reference to the accompanying drawings. It is intended that any additional advantages be incorporated herein.

### SUMMARY OF THE INVENTION

The building of actual travel fares in a computer, from fare databases, is disclosed. A first data structure is built that forms a graph where nodes are travel destinations. Graph edges connect pairs of nodes. Each edge references a lowest travel fare. A second data structure, a tree of fares, is also built for each graph edge. Trees comprise at least a root node holding the lowest travel fare of the corresponding graph edge. More nodes are possibly added in which case they comprise a context key and an associated travel fare. In trees, a children node holds a travel fare equal to or larger than travel fare of its parent node. Less expensive fare paths can efficiently be extracted from these two data structures since graph edges, included in the fare paths, reference the associated trees of fares and are gone through in ascending order of their lowest fare values. A learning entity is made in charge of building and updating the trees of fares. Data to build and update trees are coming from software processes aimed at building travel solutions for the end-users. Because many destinations can be handled in the elapsed time of a computer transaction a travel planning system implementing the method of the invention can propose thematic travel options to its end-users who have not to choose a particular destination to start planning a trip.

### BRIEF DESCRIPTION OF THE DRAWINGS

FIGURE 1 depicts the overall environment and the components of the invention.
FIGURE 2 illustrates the fare learning component and the two data structures necessary to carry out the invention.
FIGURE 3 discusses more specifically the implementation of the data storage structure, a graph of destination nodes, one of the data structures of the invention.
FIGURE 4 describes the heap of fare paths; a temporary data structure used for extracting fare paths and discusses the extracting method.
FIGURE 5 further describes the method of extracting fare paths.
FIGURE 6 shows graphic interface windows sent by a travel planning system making use of the invention and made capable of proposing thematic travel options to its end-users.

### DETAILED DESCRIPTION

The following detailed description of the invention refers to the accompanying drawings.

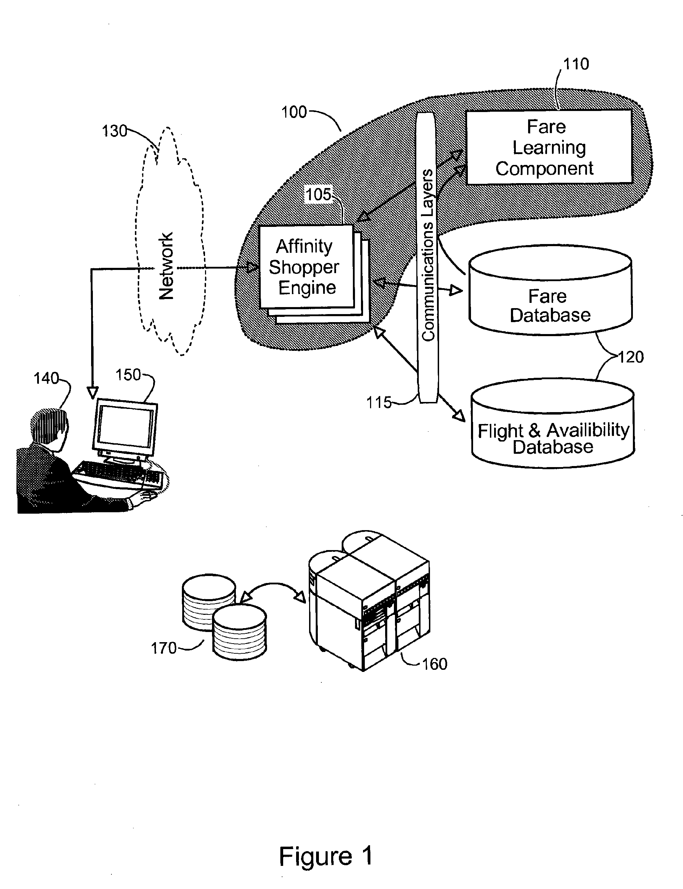

**Figure 1** shows the components of the invention (100) and the environment in which it operates. The chief component of the invention is the 'Fare Learning Component' (110) which communicates with at least one process referred to as 'Affinity Shopper Engine' (105) used to built travel solutions for their end-user (140). There are as many such processes active simultaneously as there are queries from remote users. These latter are most often travel agencies that have access to a travel reservation system carrying out the invention. It may be as well individuals authorized to make on-line reservation through a private or public network (130) like the Internet. The processes (105) are software tasks that execute concurrently on a processor under the control of an operating system such as 'UNIX' or 'LINUX' often used to operate the servers and computers of the data centers hosting e.g., the airline reservation systems. The software programs that permit to communicate with the remote users are those largely in use on the world-wide network, the Internet, especially, its most popular application i.e., the Web. Hence, on client side, a Web browser is used. The most utilized is known under the name of 'Internet Explorer (IE)'. It has been developed by the well-known US company 'Microsoft Corporation' and is actually imbedded in its operating system 'Windows' used on a majority of personal computers (150). There are other Web browsers in use like 'Netscape' that was largely utilized but which has lost its preeminence at the end of the 90's. New Web browsers have gained some popularity in recent years. Among them, the one known under the name of 'Firefox' comes, like the operating system 'LINUX' mentioned above, from the world of free-software which means that their program source codes are freely made available to anyone.

The invention, which works on actual fares, assumes that the fare learning component (110) and affinity shopper engines (105) have access to databases (120) especially, the ones of the air carriers which provide fares and seats availability on their flights. It must be noted here that retrieval of a fare from a carrier database may not be done without requiring some processing. Indeed, fares are generally provided under the form a base fare plus add-ons and rules for constructing them. Also, there are discounts provided e.g., per passenger type (children, seniors).

Fare and availability databases are thus a key part of the computerized reservation systems that are made available to travel agencies around the world by companies specialized in the development and selling of travel products. This is the case of a firm like AMADEUS whose headquarters and most offices are in Europe or the US company SABRE which has its headquarters in the state of Texas.

If databases and components of the invention could be carried out in a same computer they are however most often hosted in different computers which must be able to communicate (115) in using standard protocols and interfaces such as the ones conforming to the OSI or 'Open Systems Interconnection' architecture which defines seven layers of communication protocols ranging from the physical layer to the application layer. In practice the TCP/IP protocol i.e.: 'Transmission Control Protocol over Internet Protocol' is largely used.

The computers (160) hosting the software products and the databases needed to carry out the invention will generally include internal, as well as external storage means. Especially, the content of databases is most often housed in large disk units (170).

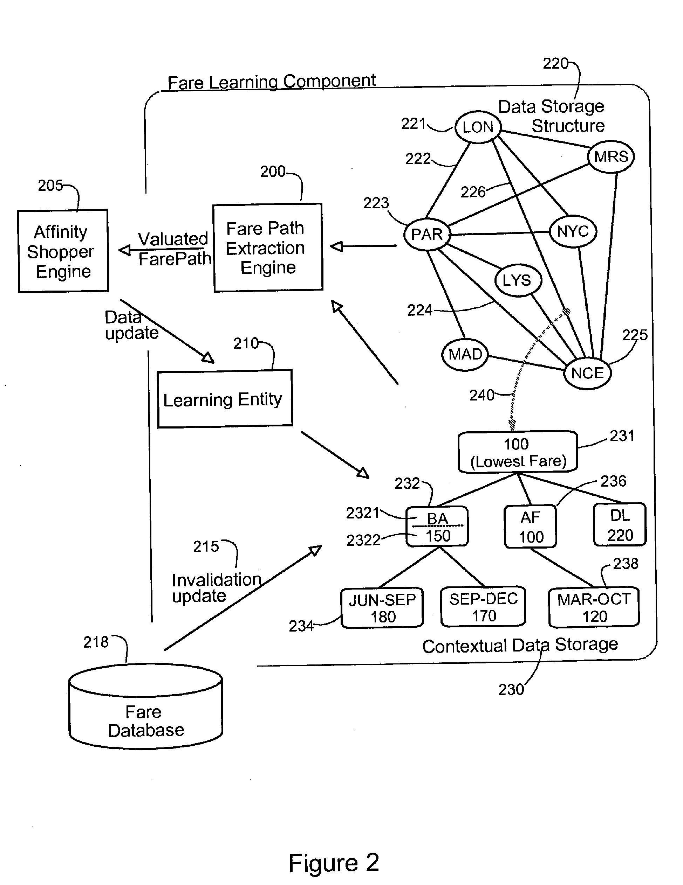

**Figure 2** is an overall description of the 'Fare Learning Component' according to the invention as shown in figure 1. This component is made itself of a 'Fare Path Extraction Engine' (200) and of a 'Learning Entity' (210) that work on two data structures.

One of these structures is referred to as the 'Data Storage Structure' (220). It is a typical graph structure, nodes of which are town airports throughout the world, here designated by their IATA (International Air Transport Association) three-letter codes, e.g., LON for London, UK (221). The connections between the nodes of the graph, e.g.: (226) are existing fare connections between two town airports. Obviously, not all connections between the set of nodes of such a graph exist, the graph is generally not complete, since not all town pairs are likely to have published fares between them. To adhere to the graph vocabulary in use, connections between nodes (also called vertices) are referred to as edges in the following description of the invention. A path in graph (220) is thus a list of nodes connected by edges. As an example, there is a path between Nice, France (225) and London, UK (221) through Paris, France (223) comprised of two edges (222, 224). It is worth noting here that the implementation of a graph structure can be carried out in many different ways. On this, one may refer to the technical literature on the subject which is particularly abundant. The invention does not assume any particular implementation in general and just assumes that a software data structure can be build that permits to represent a graph such as (220) so as nodes and edges can be retrieved by the 'Fare Path Extraction Engine' (200).

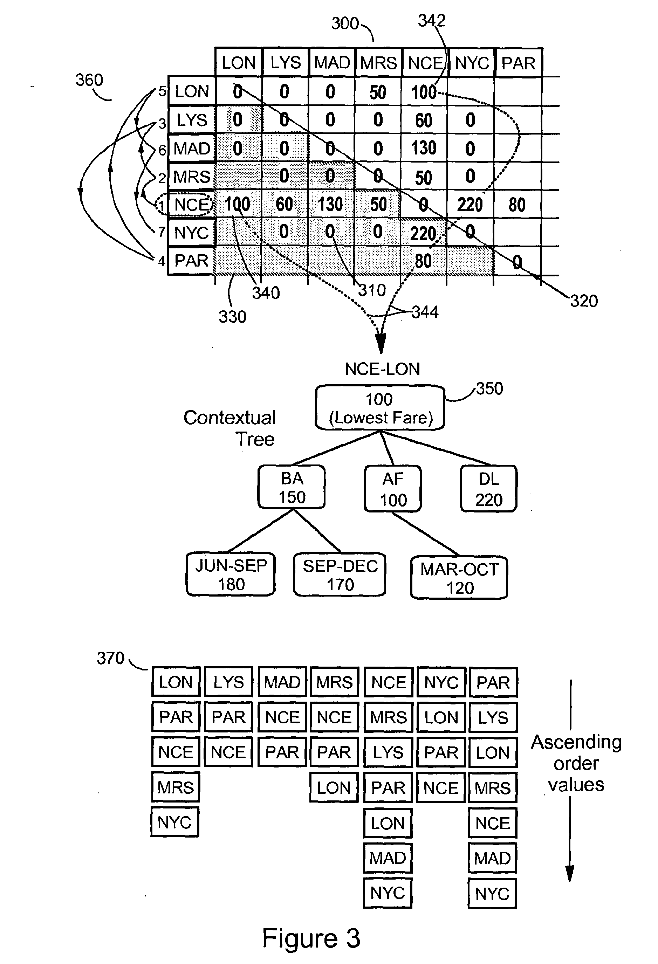

There is however a single requirement imposed by the invention on the graph structure which is that all edges from a node are readable (or sorted) in ascending order of their associated value. This is further discussed here after as far as value of edges are considered and in figure 3.

The second data structure, referred to as the 'Contextual Data Storage' (230), is a typical tree structure. Each graph edge, e.g.: (240) as an associated tree structure hence, the 'Contextual Data Storage' is a set of contextual trees. The root of a contextual tree holds the lowest fare that can be found for the associated edge i.e., the cheapest possible flight connection between the towns it connects. In this example, between LON (221) and NCE (225) nodes, the lowest found fare is worth 100 currency units (231), in the currency as used by the fare database (218). However, the tree holds in general more fares each with an associated context type. The context type is a refining criterion to get a minimum fare value. It is, for example, the carrier that operates the flight e.g., BA (232) that stands for British Airways, and for which the lowest fare is worth however, 150 currency units. Another example of context type is a date range, here from June to September (234), during which a particular fare is more expensive for this carrier. Passenger type (not shown) i.e., adult, children seniors etc. can have their own associated fares defined. Obviously, many other context types are possible such as the travel class or the type of seat. Hence, each tree is organized so as the lowest fare is at the root then, going down per context type, quoted fare are equal (236) or more expensive.

This lowest value, the one of the root node, is the associated value of the corresponding graph edge used to read the edges of a node in ascending order as already discussed above.

As far as the implementation of the tree is concerned, the invention assumes that a node must hold a minimum fare value, e.g.: (2322) and has a context key, e.g.: (2321). The root node holds the lowest fare value (231) and has an empty context key. At initialization, the value of the root node, the only node of the tree at that time, is set to 0. This is a valid value accepted by the 'Fare Path Extraction Engine' as further discussed later in the description. All children of a node share the same context type. Two or more children of a node have different context keys. As already stated above, the value of a child node is larger or equal to the one of the parent node.

Apart from above requirements, as with the graph structure, the invention does not assume any particular implementation for the contextual trees. Trees must be organized so that it is possible to retrieve a context key starting from the root. Retrieval stops as soon as a searched context key is missing or does not match when going down through the tree. Then, the returned value is the one of the last successful search. As an example, if a search is performed for a context type specifying AF (i.e., Air France) as the carrier and a date of December 1 rst the search will return a value of 100, the one of node (236) since comparison of dates for the node below (238) does not match the range of March to October. Also, contextual trees must allow insertion of updated values. It mainly consists in searching down the tree for the context type. Once the context type is found, the value is updated. If not found though, the corresponding node must be created and value updated.

It is the learning entity component (210) which is in charge of updating the contextual trees. Updates are received from the affinity shopper engines when more information is gathered by these processes. Hence, trees are progressively built and updated since initialization with data actually requested by end-users through the affinity shopper engines (205). This permits to maintain trees and keep their sizes within manageable limits. The learning entity must either insert a new contextual value or replace an existing value which is outdated or obsolete. Also, when fare database is updated, invalidation (215) of the contextual trees must be performed so as to keep trees current.

**Figure 3** further describes the relationship between the two data structures discussed in figure 2. The graph may take e.g., the form of a square array (300) where rows and columns are town airports so that if there is a non-valid value (e.g.: the null value) at a crossing of a row and column no direct flight connection exists in the graph between the two airports. Since the matrix of figure 3 represents the exemplary graph of figure 2 and because there is no edge in this graph e.g., between NYC and MAD nodes, then, a null value is put in corresponding array element (310). Also, the diagonal is nullified since it makes no sense to have a fare connection to a same airport (320). Since the array is symmetrical one may want to implement only the lower triangle below the diagonal (330) to save storing space although this may be inconvenient for practical reasons and implementation. Because the graph may be large, depending on the number of nodes to handle, a convenient implementation is to have an array of binary value of 0's and 1's. Obviously, a 1 indicates there is an edge between the corresponding nodes and a 0 that no connection exists.

Whichever the implementation of the graph is, the invention assumes that each non-null array element e.g.: (340) and its symmetric counterpart (342), if it exists, is such that it permits to unambiguously reference (344) the root (350) of the unique associated contextual tree so that the lowest value of the edge can be quickly retrieved. Hence, depending on the implementation, the lowest value can be brought into the array element as it is shown (340) or there is just a binary 1 value and the actual lowest edge value is found from the referenced root node. Referencing between an array element and its contextual tree can be implicit so that there is a unique one to one correspondence between each element of the array and each tree of the 'Contextual Data Storage' structure discussed in figure 2.

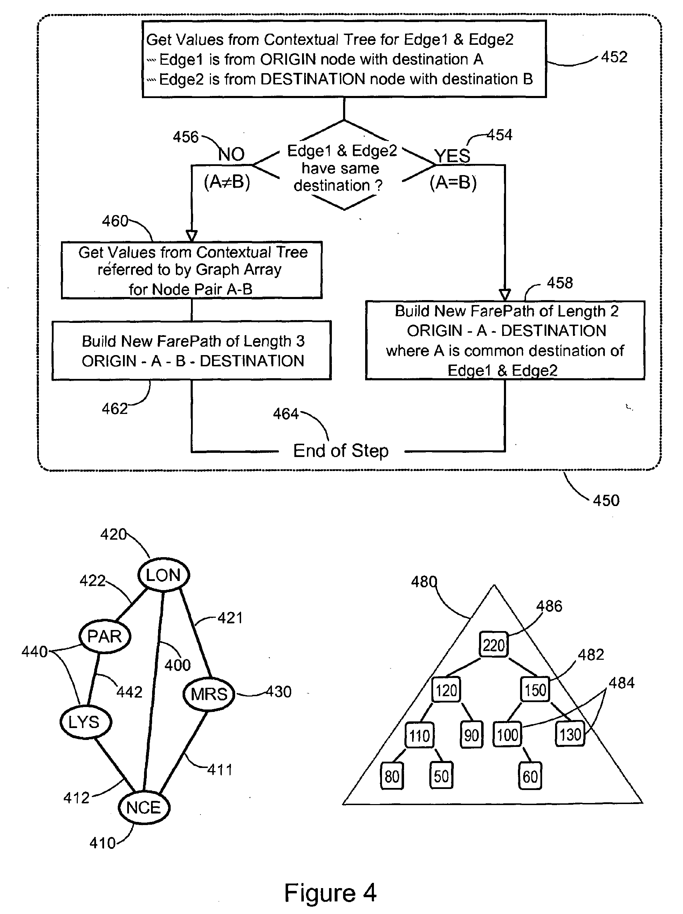

As already mentioned, and further discussed in figure 4, the invention also assumes that, from each node of the graph structure, it is possible to get or read all existing edges, which originate from that node, in ascending order of their lowest (tree root) value. The invention does not assume any particular method or means to achieve this goal. As an example a standard sorted linked list (360) can be read, or built on-the-fly, when necessary.

Also, the way the graph array is actually organized is a matter of implementation choice and does not affect the operation of the invention. Especially, nodes need not to be sorted in a particular way although they are listed here (300) in alphabetical order of their IATA 3-letter codes.

Finally, the graph may not be an array at all and still fits the invention requirements. A well-known structure for implementing graphs is called the adjacency-structure. On this, and on graphs and their algorithms, one may want to refer to a book by Robert Sedgewick, "Algorithms", 2nd edition, 1988, ISBN 0-201-06673-4, Addison-Wesley editor, and more particularly on chapter 29 *"Graph Algorithms".* Hence, an exemplary alternate graph structure can be the one shown in (370) where nodes are listed with all their connecting edges so that they can also be sorted by ascending order of their lowest value in order to fit the above requirement to carry out the invention.

**Figure 4** and following one describe more particularly the 'Fare Path Extraction Engine' and its algorithm that returns a list of shortest fare paths given an origin, a list of destinations and a context type.

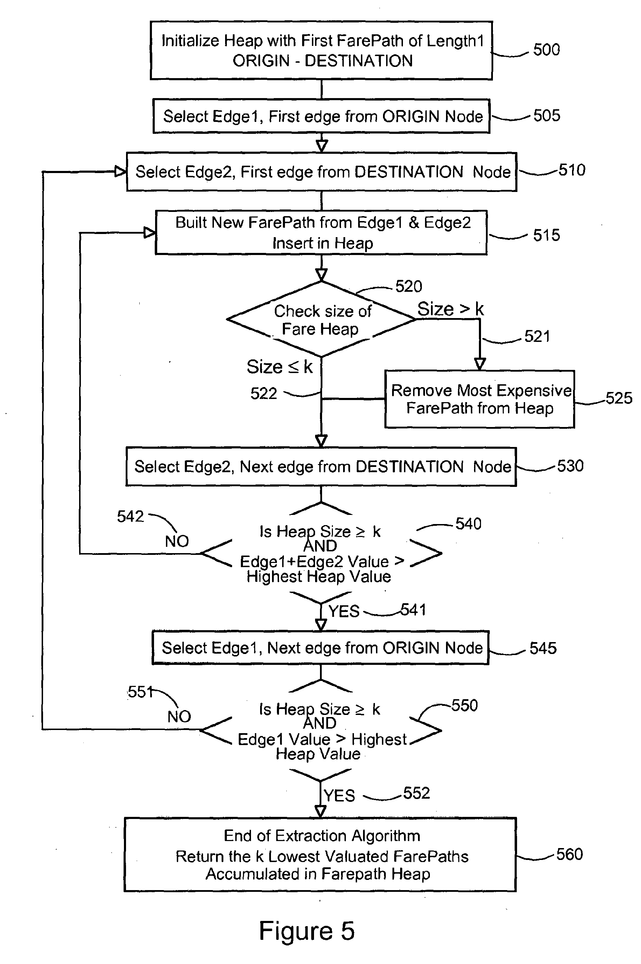

The described algorithm is tailored to return only paths encompassing a maximum of three edges or connections. Even though it would be possible in a large graph to extract a less expensive trip fare, or generally make a better offer to a customer by combining more than 3 flights, for all practical applications, proposing more than two stops over for a trip is not likely to be accepted. Since performance of the graph search is largely conditioned by the number of paths to discover this allows expediting the search and avoid to have to compute solutions that are known to be unacceptable. Hence, from graph, on top of considering the possible single edge (400) that may exist between an origin node e.g., NCE (410) and a destination node e.g., LON (420), algorithm further described in figure 5, builds only fare paths encompassing one stop (430) or two stops (440). The step of building a new fare path, in overall algorithm of figure 5, thus includes the sub-steps shown in (450). First step (452) is to get the values, from the contextual tree discussed in figure 2 and 3, for edges from origin (410) and destination (420) nodes. If the two selected edges have a same destination (454) then, a new fare path of length 2 i.e., encompassing two edges, can be built (458). In graph, this corresponds to a path including edges (411) and (421) which have the same destination node MRS (430). However, if the two selected edges have not the same destination (456) the values, from the contextual tree, for the node pair destinations of the two selected edges must be retrieved (460). Then, a new fare path of length 3, encompassing three edges, can be built (462). In graph, this corresponds to a path including edges (422), (442) and (412) with two intermediate nodes PAR and LYS (440). This ends (464) the step of building of new fare path of lengths 2 or 3 used by the overall algorithm of figure 5.

Also, the extraction algorithm according to the invention of figure 5, needs to build and manage a temporary data structure called a fare path heap (480). A heap is a data structure that most often takes the form of a binary tree in which the key at a parent node (482) is larger than keys of its two children nodes (484) and so on. Hence, root (486) always holds the larger key value. A heap, or priority queue, is a standard data structure known of those skilled in the art of computer programming and needs not to be further explained. Especially, insert and remove are well-known operations defined on a heap.

**Figure 5** shows the steps of the method to extract fare paths from the data structures previously described. The number of fare paths to return i.e.: k, along with an origin and a list of destinations, is another input parameter to perform a graph search. When k fare paths have been accumulated in the heap previously discussed and no cheaper combination of edges are left to be tried this ends the search process so that the k lowest valuated fare paths are returned (560) to the calling task i.e., the 'Affinity Shopper Engine' previously described in figure 1.

The extraction of fare paths starts at step (500) where the temporary heap is initialized with a first path of length 1 corresponding to the direct connection between an origin and a destination node. There is only one such length 1 fare path in the heap. It is the root of the corresponding contextual tree unless a context type has been associated in which case the contextual tree has been searched to retrieve the node that fits the corresponding context type.

The next step (505) starts from the first (lowest fare) graph edge departing from the origin node. As already mentioned graph edges are sorted or can be read in ascending order of their fare value so that the lowest fare edge can be picked by the algorithm.

The same thing is done from the destination node (510) so that the Edge1 and Edge2 parameters mentioned in figure 4 are selected and step (515), which builds a new fare path, can be executed. The details of this step have already been discussed with the figure 4 where it is referenced (450) with sub-steps ranging from (452) to (464).

Then, next step (520) consists in checking if k fare paths have been added already to the heap. If more than k fare paths have been accumulated (521) the most expensive one is removed from the heap (525). However, if less than or exactly k paths are in heap (522) extraction algorithm proceeds directly with next step (530) where the next edge departing from destination node is selected in turn. Again, edges departing from nodes are sorted or are read in ascending order of their value. Once this is done a checking is performed (540) which verifies if the size of the heap is larger than or equal to k and if Edge1 value added to the just selected next Edge2 value are larger than the highest value of the heap (the one at root). If this not the case (542) algorithm goes back to step (515) where a new fare path can be built and inserted in heap as already described. If checking answer is however positive (541) one proceeds to step (545) where a next Edge1 parameter is selected.

At this point a checking, similar to step (540) just discussed, is performed (550) which however only compares the value of the new selected Edge1 parameter alone to the highest value of the heap. If not strictly higher (551) algorithm goes back to step (510) to select a next Edge2 and proceeds with the building of a new fare path (515). However, if higher (552) this ends the search of the k fare paths (560) requested by the calling task for a pair of origin and destination nodes.

Hence, the method of the invention allows to extract k fare paths from the data structures for each destination. They are guaranteed to be the k lowest valuated fare paths present in the graph for each origin and destination. Also, the valuated fare paths are real opportunities, that will be priced and checked by the "Affinity Shopper Engine" shown in figure 1 (105) in order to build travel solutions that can be immediately booked. This latter takes advantage of the accuracy of the "Fare Learning Component" (110) which is able to process numerous destination fare paths in an efficient manner from the data structures of the invention (graph and contextual trees) that are built and maintained from the availability and fare data bases constantly updated by the carriers and other providers of such services.

Because of the efficiency of the algorithm, numerous destinations can thus be processed simultaneously in the "Affinity Shopper Engine" so as to fit the original requirement of considering many destinations in a single query and still get the overall answer within a period of time comparable to what is obtained with other such tools that cannot however process more than one destination at a time.

In other words, the valuated fare paths provided by the "Fare Learning Component" allow expediting the complex queries handled by the "Affinity Shopper Engine". It remains that it is only the "Affinity Shopper Engine" which is eventually responsible of validating an actual solution. Especially, it must associate a flight to a fare path and add such things as airport taxes. Furthermore, validity of the fare paths are checked so as to update the data structures of the "Fare learning Component" when necessary. This happens more frequently when the data structures have just been initialized and default values need to be updated. This role is played by the "Learning Entity" as shown in figure 2 (210) which is part of the "Fare Learning Component".

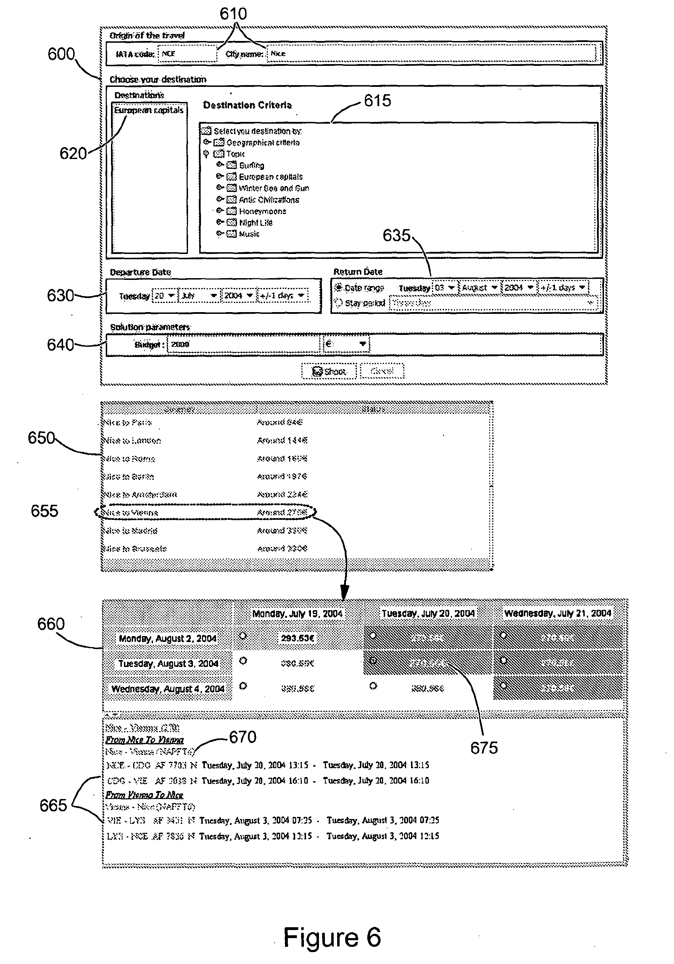

**Figure 6** displays an example of a window (600) prepared by the "Affinity Shopper Engine" and destined for the end-user i.e., generally, an agent of a travel agency. As already stated the invention, which is capable of computing many air fares in the elapsed time of a normal computerized transaction, does not require having to specify a destination to authorize the issue of a request. Instead, various thematic requests can be issued, for example, from NICE airport (610) a customer may choose among various travel topics (615) the one on the European capitals (620). In this example of carrying out the invention a few other inputs are expected from the end-user such as a flexible departure date (630), a return date range (635) and a budgetary limit to the trip (640).

Then, the affinity shopper product builds a set of destination towns corresponding to the affinity criterions, maximum budget, and dates. After it has retrieved the best available flights for the selected destinations, ranked in ascending fare order, it can return the information to the end-user in the form of a new window to display (650). It is worth noting again here that quoted prices are guaranteed bookable travel solutions.

The end-user can then exercise a choice and pick-up a particular destination (655) in which case he is given more opportunities to choose from in the next returned window (660) which displays calendar solutions for the selected destination i.e.: Vienna. In this particular example, the travel solution from Nice to Vienna is made of two flights for each segment (665). Carrier fare is AF (Air France), referenced NAPFT6 (670), and total price is 270.56 Euros (675). At this point the end-user can proceed and book and buy this travel solution.

## Claims

1. A system for providing a plurality of destination options comprising:
- a fare learning component (110, 210) connectable to at least one computerised reservation system;
- a pair of data structures (220, 230) updatable from the fare learning component (110), and storing a plurality of travel data, the said travel data comprising at least origin (221), destination (225), bookable price and bookable dates; the pair of data structures comprising, on one hand, a graph of nodes with nodes and edges where the nodes are travel destinations and where the edges each reference a lowest travel fare between two nodes they connect, and on the other hand, a tree of fares built for each graph edge and comprising a root holding the lowest travel fare of the edge;
- a shopper engine (105) for accepting at least an origin (610) and a date range (630, 640) and interrogating the data structure (220, 230) to generate the plurality of destination options corresponding to the origin (610) and the bookable dates within the date range (630, 640);
- a fare path extraction engine (200) configured to extract fare paths from the pair of data structures so as to determine less expensive fare paths, said fare path extraction engine configured to build, for each origin and destination pair, a heap kept organized as a binary tree and configured to accumulate a predetermined maximum number (k) of less expensive fare paths between the origin and the destination during the extraction.

2. The system of claim1, wherein the binary tree of the heap comprises a parent node the key thereof is a fare path larger than the fare paths of two children nodes corresponding to said parent node and wherein a root node holds a most expensive fare path.

3. The system of the preceding claim wherein the fare path extraction engine comprises means configured for building the heap by implanting the following steps:
a- initializing the heap with a first fare path of length one corresponding to a direct connection between the origin and the destination of a pair of origin and destination,
b- determining a first graph edge of the graph of node departing from the origin, said first graph edge holding the lowest fare path from the origin ;
c- determining a second graph edge of the graph of node departing from the destination, said second graph edge holding the lowest fare path from the destination,
d- building a new fare path with the first graph edge and the second graph edge,
e- checking if the predetermined maximum number (k) of less expensive fare paths have already been added to the heap,
f- if more than the predetermined maximum number (k) of less expensive fare paths have been accumulated in the heap, removing the most expensive fare path from said heap,
g- determining a further second graph edge of the graph of node departing from the destination, said second graph edge holding a further lowest fare path from the destination,
h- if less than the predetermined maximum number (k) of less expensive fare paths have been accumulated in the heap and if the sum of the values of the first graph edge and of the further second graph edge is less than or equal to the highest value of the fare paths accumulated in the heap, building a new fare path with the first graph edge and the further second graph edge,
i- repeating steps c to h until more than or a number equal to the predetermined maximum number (k) of less expensive fare paths have been accumulated in the heap and if the sum of the values of the first graph edge and of the further second graph edge is higher than the highest value of the fare paths accumulated in the heap;
j- selecting a further first graph edge of the graph of node departing from the origin, said further first graph edge holding a further lowest fare path from the origin;
k- repeating steps c to j until: not more than a number equal to the predetermined maximum number (k) of less expensive fare paths have been accumulated in the heap and the value of the first further graph edge is higher than the highest value of the fare paths accumulated in the heap.

4. The system of any of claims 1 to 3, wherein the travel data further comprises at least one of a passenger type or a budgetary limit and wherein the generated plurality of destination options is generated using at least one of the passenger type or the budgetary limit.

5. The system of claim 1 to 4, wherein the shopper engine (105) is further adapted to accept one or more thematic request (615) and wherein the thematic request (615) is additionally used to generate the list plurality of destination options.

6. The system of any of the above claims, wherein the shopper engine (105) is further adapted to validate at least one fare option to at least one of the plurality of destination options.

7. The system of any one of claims 1 to 6, wherein a personal computer (150) is connected through a network (130) to said system.

8. A method of producing a plurality of destination options comprising:
- receiving at least an origin (610) and a date range (630, 640);
- sending a request to a pair of data structures (220, 230), the data structures (220, 230) being updatable with travel data comprising at least an origin (221), a destination (225), a bookable price and bookable dates, the pair of data structures comprising, on one hand, a graph of nodes with nodes and edges where the nodes are travel destinations and where edges each reference a lowest travel fare between two nodes it connects, and on the other hand, a tree of fares built for each graph edge and comprising a root holding the lowest travel fare of the edge;
- extracting fare paths from the pair of data structures so as to determine less expensive fare paths, said fare path extraction comprising building, for each pair of origin and destination, a heap kept organized as a binary tree and configured to accumulate a predetermined maximum number (k) of less expensive fare paths between the origin and the destination during the extraction;
- returning a plurality of results from the data structure (220, 230) corresponding to a list of destination options reachable from the origin (610) and the bookable dates within the date range (630, 640).

9. The method of the preceding claim, wherein the binary tree of the heap comprises a parent node the key thereof is a fare path larger than the fare paths of two children nodes corresponding to said parent node and wherein a root node holds a most expensive fare path.

10. The method of the preceding claim, wherein building the heap comprises:
a- initializing the heap with a first fare path of length one corresponding to a direct connection between the origin and the destination of a pair of origin and destination,
b- determining a first graph edge of the graph of node departing from the origin, said first graph edge holding the lowest fare path from the origin ;
c- determining a second graph edge of the graph of node departing from the destination, said second graph edge holding the lowest fare path from the destination,
d- building a new fare path with the first graph edge and the second graph edge,
e- checking if the predetermined maximum number (k) of less expensive fare paths have already been added to the heap,
f- if more than the predetermined maximum number (k) of less expensive fare paths have been accumulated in the heap, removing the most expensive fare path from said heap,
g- determining a further second graph edge of the graph of node departing from the destination, said second graph edge holding a further lowest fare path from the destination,
h- if less than the predetermined maximum number (k) of less expensive fare paths have been accumulated in the heap and if the sum of the values of the first graph edge and of the further second graph edge is less than or equal to the highest value of the fare paths accumulated in the heap, building a new fare path with the first graph edge and the further second graph edge,
i- repeating steps c to h until more than or a number equal to the predetermined maximum number (k) of less expensive fare paths have been accumulated in the heap and if the sum of the values of the first graph edge and of the further second graph edge is higher than the highest value of the fare paths accumulated in the heap;
j- selecting a further first graph edge of the graph of node departing from the origin, said further first graph edge holding a further lowest fare path from the origin;
k- repeating steps c to j until: not more than a number equal to the predetermined maximum number (k) of less expensive fare paths have been accumulated in the heap and the value of the first further graph edge is higher than the highest value of the fare paths accumulated in the heap.

11. The method of any of claims 8 to 10, wherein the request further includes at least one of a budgetary limit and a passenger type and the returned list of results further corresponds at least to the budgetary limit or the passenger type.

12. The method of any of claims 8 to 11, further comprising sending one or more thematic requests (615) to the data structure (220, 230) and returning a plurality of results further corresponding to the one or more thematic requests (615).

13. The method of any one of claims 8 to 12, further comprising validating at least one fare option between an origin and at least one of the destination options.

14. A computer program product stored on a non-transitory computer-readable storage medium comprising computer readable code for causing at least cone computer to operate the method of one of claims 8 to 13.

## Patentansprüche

1. System zur Lieferung einer Vielzahl von Zieloptionen, umfassend:
eine Fahrpreis-Lernkomponente (110, 210), die an wenigstens ein computergesteuertes Buchungssystem anschließbar ist;
ein Paar Datenstrukturen (220, 230), die von der Fahrpreis-Lernkomponente (110) aktualisierbar ist, und die Speicherung einer Vielzahl von Reisedaten, wobei die genannten Reisedaten wenigstens die Abreise (221), das Ziel (225), den buchbaren Preis und die buchbaren Daten umfassen; wobei das Paar Datenstrukturen auf der einen Seite ein Knotendiagramm mit Knoten und Kanten umfasst, bei dem die Knoten die Reiseziele sind und bei dem die Kanten jeweils einen niedrigsten Reisefahrpreis zwischen zwei von ihnen verbundenen Knoten referenzieren, und auf der anderen Seite einen Fahrpreisbaum, der für jede Grafikkante aufgebaut ist und eine den niedrigsten Reisefahrpreis der Kante haltende Wurze umfasst;
- eine Einkäufermaschine (105) zum Akzeptieren wenigstens einer Abreise (610) und einem Datenbereich (630, 640) und zur Abfrage der Datenstruktur (220, 230) zur Generierung der Vielzahl von Zieloptionen, die der Abreise (610) und den buchbaren Daten innerhalb desselben Datenbereichs (630, 640) entsprechen;
- eine Fahrpreis-Extraktionsmaschine (200), die konfiguriert ist, um Fahrpreis-Pfade aus dem Paar Datenstrukturen derart zu extrahieren, dass weniger kostspielige Fahrpreisrouten bestimmt werden, wobei die genannte Fahrpreis-Extraktionsmaschine derart konfiguriert ist, dass für jedes Paar Abreise und Ziel ein spezialisierter Speicherbereich aufgebaut wird, der als ein binärer Baum organisiert und konfiguriert ist, um eine vorbestimmte maximale Anzahl (k) von weniger kostspieligen Fahrpreis-Pfaden zwischen der Abreise und dem Ziel während der Extraktion zu akkumulieren.

2. System gemäß Anspruch 1, bei dem der binäre Baum des spezialisierten Speicherbereichs einen übergeordneten Knoten umfasst, dessen Schlüssel ein breiterer Fahrpreis-Pfad ist als die Fahrpreis-Pfade von zwei untergeordneten Knoten, die dem genannten übergeordneten Knoten entsprechen und bei dem ein Wurzelknoten einen kostspieligsten Fahrpreis-Pfad hält.

3. System gemäß dem voranstehenden Anspruch, bei dem die Fahrpreis-Pfad-Extraktionsmaschine Mittel umfasst, die konfiguriert sind, um den spezialisierten Speicherbereich durch Einbetten der folgenden Stufen aufzubauen:
a- Initialisierung des spezialisierten Speicherbereichs mit einem ersten Fahrpreis-Pfad einer einem direkten Anschluss zwischen der Abreise und dem Ziel eines Paars Abreise Ziel entsprechenden Länge,
b- Bestimmung einer ersten Diagrammkante des von der Abreise ausgehenden Knotendiagramms, wobei die genannte erste Grafikkante den niedrigsten Fahrpreis-Pfad ab der Abreise hält;
c- Bestimmung einer zweiten Diagrammkante des Diagrammknotens, der von dem Ziel abweicht, wobei die genannte zweite Diagrammkante den niedrigsten Fahrpreis-Pfad ab dem Ziel hält,
d- Aufbau eines neuen Fahrpreis-Pfades mit der ersten Diagrammkante und der zweiten Diagrammkante,
e- Überprüfung, ob die vorbestimmte maximale Anzahl (k) von weniger kostspieligen Fahrpreis-Pfaden bereits zu dem spezialisierten Speicherbereich hinzugefügt worden sind,
f- Wenn mehr als die vorbestimmte maximale Anzahl (k) von weniger kostspieligen Fahrpreis-Pfaden in dem spezialisierten Speicherplatz akkumuliert ist, Entfernen des kostspieligsten Fahrpreis-Pfades aus dem genannten spezialisierten Speicherbereich,
g- Bestimmung einer weiteren zweiten Diagrammkante des vom Ziel ausgehenden Knotendiagramms, wobei die genannte zweite Diagrammkante einen weiteren niedrigsten Fahrpreis-Pfad ab dem Ziel hält,
h- wenn weniger als die vorbestimmte maximale Anzahl (k) von weniger kostspieligen Fahrpreis-Pfaden in dem spezialisierten Speicherplatz akkumuliert sind und wenn die Summe der Werte der ersten Diagrammkante und der weiteren zweiten Diagrammkante niedriger als oder gleich dem höchsten Wert der in dem spezialisierten Speicherbereich akkumulierten Fahrpreis-Pfade ist, Aufbau eines neuen Fahrpreis-Pfades mit der ersten Diagrammkante und der zweiten Diagrammkante,
i- Wiederholung der Stufen c bis h, bis eine Anzahl von mehr als oder gleich der vorbestimmten maximalen Zahl (k) von weniger kostspieligen Fahrpreis-Pfaden in dem spezialisierten Speicherbereich akkumuliert ist und wenn die Summe der Werte der ersten Diagrammkante und der weiteren zweiten Diagrammkante höher ist als der höchste Wert der in dem spezialisierten Speicherbereich akkumulierten Fahrpreis-Pfade;
j- Auswahl einer weiteren ersten Diagrammkante des von der Abreise ausgehenden Knotendiagramms, wobei die genannte weitere erste Diagrammkante einen weiteren niedrigsten Fahrpreis-Pfad ab der Abreise hält;
k- Wiederholung der Stufen c bis j bis: nicht mehr als eine Anzahl gleich der vorbestimmten maximalen Anzahl (k) von weniger kostspieligen Fahrpreis-Pfaden in dem spezialisierten Speicherbereich akkumuliert ist und der Wert der ersten weiteren Diagrammkante höher ist als der höchste Wert der in dem spezialisierten Speicherbereich akkumulierten Pfade.

4. System gemäß Anspruch 1 bis 3, bei dem die Reisedaten weiterhin wenigstens eine Fahrgasttyp- oder eine Budgetgrenze umfassen und bei dem die generierte Vielzahl von Zieloptionen generiert wird, indem wenigstens eine der Fahrgasttyp- oder der Budgetgrenze verwendet wird.

5. System gemäß Anspruch 1 bis 4, bei dem die Einkäufer-Maschine (105) weiterhin angepasst ist, um eine oder mehrere thematische Anfrage(n) (615) zu akzeptieren und bei dem die thematische Anfrage (615) zusätzlich zum Generieren der Liste der Vielzahl von Zieloptionen verwendet wird.

6. System gemäß einem der obigen Ansprüche, bei dem die Einkäufer-Maschine (105) weiterhin angepasst ist, um wenigstens eine Fahrpreis-Option für wenigstens eine aus der Vielzahl von Zieloptionen zu validieren.

7. System gemäß Anspruch 1 bis 6, bei dem ein Personal-Computer (150) durch ein Netzwerk (130) an das genannte System angeschlossen ist.

8. Herstellungsverfahren einer Vielzahl von Zieloptionen, umfassend:
- Empfang von wenigstens einem Abreise- (610) und einem Datenbereich (630, 640);
- Senden einer Anfrage an ein Paar Datenstrukturen (220, 230), wobei die Datenstrukturen (220, 230) mit Reisedaten aktualisierbar sind, die wenigstens eine Abreise (221), ein Ziel (225), einen buchbaren Preis und buchbare Daten umfassen, wobei das Paar Datenstrukturen auf der einen Seite ein Knotendiagramm mit Knoten und Kanten, bei dem die Knoten die Reiseziele sind und bei dem die Kanten jeweils einen niedrigsten Reise-Fahrpreis zwischen zwei von ihm verbundenen Knoten referenzieren, und auf der anderen Seite einen Fahrpreis-Baum, der für jede Diagrammkante aufgebaut ist und eine die niedrigsten Reisefahrpreise der Kante haltende Wurzel umfasst, umfasst
- Extrahieren von Fahrpreis-Pfaden aus dem Paar Datenstrukturen derart, dass die am wenigstens kostspieligen Fahrpreis-Pfade bestimmt werden, wobei die genannte Fahrpreis-Pfad-Extraktion für jedes Paar Abreise und Ziel den Aufbau eines spezialisierten Speicherbereichs umfasst, der als ein binärer Baum organisiert gehalten und konfiguriert ist, um eine vorbestimmte Anzahl (k) von weniger kostspieligen Fahrpreis-Pfaden zwischen der Abreise und dem Ziel während der Extraktion zu akkumulieren;
- Rücksendung einer Vielzahl von Ergebnissen von der Datenstruktur (220, 230), die einer Liste von von der Abreise (610) erreichbaren Zieloptionen und den buchbaren Daten innerhalb des Datenbereichs (630, 640) entspricht.

9. Verfahren gemäß dem voranstehenden Anspruch, bei dem der binäre Baum des spezialisierten Speicherbereichs einen übergeordneten Knoten umfasst, dessen Schlüssel ein Fahrpreis-Pfad ist, der breiter ist als die Fahrpreis-Pfade von zwei dem genannten übergeordneten Knoten entsprechenden untergeordneten Knoten und bei dem ein Wurzelknoten einen kostspieligsten Fahrpreis-Pfad hält.

10. Verfahren gemäß dem voranstehenden Anspruch, bei dem der Aufbau des spezialisierten Speicherbereichs umfasst:
a- Initialisierung des spezialisierten Speicherbereichs mit einem ersten Fahrpreis-Pfad einer Länge, die einer direkten Verbindung zwischen der Abreise und dem Ziel eines Paars Abreise und Ziel entspricht,
b- Bestimmung einer ersten Diagrammkante des von der Abreise ausgehenden Knotendiagramms, wobei die genannte erste Diagrammkante den niedrigsten Fahrpreis-Pfad der Abreise hält;
c- Bestimmung einer ersten Diagrammkante des von der Abreise ausgehenden Diagrammknotens, wobei die genannte erste Diagrammkante den niedrigsten Fahrpreis-Pfad von der Abreise hält;
c- Bestimmung einer zweiten Grafikkante des von dem Ziel ausgehenden Grafikknotens, wobei die genannte zweite Grafikkante den niedrigsten Fahrpreis-Pfad von dem Ziel hält;
d- Aufbau eines neuen Fahrpreis-Pfades mit der ersten Diagrammkante und der zweiten Diagrammkante,
e- Prüfung, ob die vorbestimmte maximale Anzahl (k) von weniger kostspieligen Fahrpreis-Pfaden bereits zu dem spezialisierten Speicherbereich hinzugefügt wurde,
f- Wenn mehr als die vorbestimmte maximale Anzahl (k) von weniger kostspieligen Fahrpreis-Pfaden in dem spezialisierten Speicherbereich akkumuliert ist, Entfernen des kostspieligsten Fahrpreis-Pfades aus dem genannten spezialisierten Speicherbereich,
d- Bestimmung einer weiteren zweiten Diagrammkante des vom Ziel ausgehenden Knotendiagramms, wobei die genannte zweite Diagrammkante einen weiteren niedrigsten Fahrpreis-Pfad von dem Ziel hält;
h- Wenn weniger als die vorbestimmte maximale Anzahl (k) von weniger kostspieligen Fahrpreis-Pfaden in dem spezialisierten Speicher akkumuliert ist und wenn die Summe der Werte der ersten Diagrammkante und der weiteren zweiten Diagrammekante kleiner als oder gleich dem höchsten Wert der in dem spezialisierten Speicherbereich akkumulierten Fahrpreis-Pfade ist, Aufbau eines neuen Fahrpreis-Pfades mit der ersten Diagrammkante und der weiteren zweiten Diagrammkante,
i- Wiederholung der Stufen c bis h, bis mehr als oder eine Anzahl gleich der vorbestimmten maximalen Anzahl (k) von weniger kostspieligen Fahrpreis-Pfaden in dem spezialisierten Speicherbereich akkumuliert sind / ist und wenn die Summe der Werte der ersten Grafikkante und der weiteren zweiten Grafikkante höher ist als der höchste Wert der in dem spezialisierten Speicherbereich akkumulierten Fahrpreis-Pfade;
j- Auswahl einer weiteren ersten Diagrammkarte des von der Abreise ausgehenden Knotendiagramms, wobei die genannte weitere erste Grafikkante einen weiteren niedrigsten Fahrpreis-Pfad von der Abreise hält;
k- Wiederholung der Stufen c bis j, bis: nicht mehr als eine Anzahl von gleich der vorbestimmten maximalen Anzahl (k) von weniger kostspieligen Fahrpreis-Pfaden in dem spezialisierten Speicherbereich akkumuliert sind und der Wert der ersten weiteren Diagrammkante höher ist als der höchste Wert der in dem spezialisierten Speicherbereich akkumulierten Fahrpreis-Pfade.

11. Verfahren gemäß Anspruch 8 bis 10, bei dem die Anfrage weiterhin wenigstens eine Budgetbegrenzung und einen Fahrgasttyp beinhaltet und die zurückgesandte Liste der Ergebnisse weiterhin wenigstens der Budgetbegrenzung oder dem Fahrgasttyp entspricht.

12. Verfahren gemäß Anspruch 8 bis 11, weiterhin umfassend eine oder mehrere thematische Anfrage(n) (615) an die Datenstruktur (220, 230) und Rücksendung einer Vielzahl von weiterhin einer oder mehreren Anfrage(n) (615) entsprechenden Ergebnissen.

13. Verfahren gemäß Anspruch 8 bis 12, weiterhin umfassend die Validierung wenigstens einer Fahrpreis-Option zwischen einer Abreise und wenigstens einer der Zieloptionen.

14. Computerprogramm-Produkt, das auf einem nicht transitorischen, per Computer lesbarem Speichermedium mit per Computer lesbarem Code umfasst, um wenigstens einen Computer zum Betrieb des Verfahrens eines der Ansprüche 8 bis 13 zu veranlassen.

## Revendications

1. Système de fourniture d'une pluralité d'options de destination comprenant :
- un composant d'apprentissage de tarifs de voyage (110, 210) pouvant être connecté à au moins un système de réservation par ordinateur ;
- une paire de structures de données (220, 230) pouvant être mises à jour à partir du composant d'apprentissage de tarifs de voyage (110), et stockant une pluralité de données relatives à des voyages, lesdites données relatives à des voyages comprenant au moins l'origine (221), la destination (225), le prix de réservation et les dates de réservation ; la paire de structures de données comprenant, d'une part, un graphe de noeuds avec des noeuds et des extrémités où les noeuds sont des destinations de voyage et où les extrémités font référence, chacune, à un tarif de voyage plancher entre deux noeuds avec lesquels elles sont connectées, et, d'autre part, un arbre tarifaire élaboré pour chaque extrémité de graphe et comprenant une racine contenant le tarif plancher de l'extrémité ;
- un moteur d'achat (105) permettant d'accepter au moins une origine (610) et une fourchette de dates (630, 640) et d'interroger la structure de données (220, 230) afin de générer la pluralité d'options de destination correspondant à l'origine (610) et aux dates de réservation dans les limites de la fourchette de dates (630, 640) ;
- un moteur d'extraction de chemins tarifaires (200) configuré pour extraire des chemins tarifaires de la paire de structures de données de façon à déterminer des chemins tarifaires moins coûteux, ledit moteur d'extraction de chemins tarifaires configuré pour élaborer, pour chaque paire d'origine et de destination, un tas maintenu agencé sous la forme d'un arbre binaire et configuré pour accumuler un nombre maximum prédéterminé (k) de chemins tarifaires moins coûteux entre l'origine et la destination pendant l'extraction.

2. Système selon la revendication 1, dans lequel l'arbre binaire du tas comprend un noeud principal dont la clé est un chemin tarifaire plus grand que les chemins tarifaires de deux noeuds secondaires correspondant au dit noeud principal et dans lequel un noeud racine contient un chemin tarifaire plus coûteux.

3. Système selon la revendication précédente, dans lequel le moteur d'extraction de chemins tarifaires comprend des moyens configurés pour élaborer le tas en mettant en oeuvre les étapes suivantes :
a - initialiser le tas avec un premier chemin tarifaire de longueur un correspondant à une connexion directe entre l'origine et la destination d'une paire d'origine et de destination,
b - déterminer une première extrémité de graphe sur le graphe de noeuds en partant de l'origine, ladite première extrémité de graphe contenant le tarif de voyage plancher à partir de l'origine ;
c - déterminer une seconde extrémité de graphe sur le graphe de noeuds en partant de la destination, ladite seconde extrémité de graphe contenant le tarif de voyage plancher à partir de la destination ;
d - élaborer un nouveau chemin tarifaire avec la première extrémité de graphe et la seconde extrémité de graphe,
e - vérifier si le nombre maximum prédéterminé (k) de chemins tarifaires moins coûteux a déjà été ajouté au tas,
f - si un nombre supérieur au nombre maximum prédéterminé (k) de chemins tarifaires moins coûteux a été accumulé dans le tas, retirer le chemin tarifaire le plus coûteux dudit tas,
g - déterminer une autre seconde extrémité de graphe de noeuds en partant de la destination, ladite seconde extrémité de graphe contenant un autre chemin tarifaire plancher à partir de la destination,
h - si un nombre inférieur au nombre maximum prédéterminé (k) de chemins tarifaires moins coûteux a été accumulé dans le tas et si la somme des valeurs de la première extrémité de graphe et de l'autre seconde extrémité de graphe est inférieure ou égale à la valeur la plus élevée des chemins tarifaires accumulés dans le tas, élaborer un nouveau chemin tarifaire avec la première extrémité de graphe et l'autre seconde extrémité de graphe,
i - répéter les étapes c à h jusqu'à ce qu'un nombre supérieur ou égal au nombre maximum prédéterminé (k) de chemins tarifaires moins coûteux ait été accumulé dans le tas et que la somme des valeurs de la première extrémité de graphe et de l'autre seconde extrémité de graphe soit supérieure à la valeur la plus élevée des chemins tarifaires accumulés dans le tas ;
j - choisir une autre première extrémité de graphe sur le graphe de noeuds en partant de l'origine, ladite autre première extrémité de graphe contenant un autre chemin tarifaire plancher à partir de l'origine ;
k - répéter les étapes c à j jusqu'à ce que : un nombre qui ne sera pas supérieur au nombre maximum prédéterminé (k) de chemins tarifaires moins coûteux ait été accumulé dans le tas et la valeur de l'autre première extrémité de graphe soit supérieure à la valeur la plus élevée des chemins tarifaires accumulés dans le tas.

4. Système selon l'une quelconque des revendications 1 à 3, dans lequel les données relatives à des voyages comprennent en outre au moins l'un parmi un type de passager ou une limite budgétaire et dans lequel la pluralité d'options de destination générée est générée en utilisant au moins l'un parmi le type de passager ou la limite budgétaire.

5. Système selon les revendications 1 à 4, dans lequel le moteur d'achat (105) est en outre conçu pour accepter une ou plusieurs demande(s) thématique(s) (615) et dans lequel la demande thématique (615) est, de plus, utilisée pour générer la liste de la pluralité d'options de destination.

6. Système selon l'une quelconque des revendications précédentes, dans lequel le moteur d'achat (105) est en outre conçu pour valider au moins une option de tarif de voyage pour au moins l'une parmi la pluralité d'options de destination.

7. Système selon l'une quelconque des revendications 1 à 6, dans lequel un ordinateur personnel (150) est connecté au dit système par l'intermédiaire d'un réseau (130).

8. Procédé d'élaboration d'une pluralité d'options de destination comprenant :
- la réception d'au moins une origine (610) et d'une fourchette de dates (630, 640) ;
- l'envoi d'une demande à une paire de structures de données (220, 230), les structures de données (220, 230) pouvant être mises à jour à l'aide desdites données relatives à des voyages comprenant au moins une origine (221), une destination (225), un prix de réservation et des dates de réservation, la paire de structures de données comprenant, d'une part, un graphe de noeuds avec des noeuds et des extrémités où les noeuds sont des destinations de voyage et où les extrémités font référence, chacune, à un tarif de voyage plancher entre deux noeuds avec lesquels elles sont connectées, et, d'autre part, un arbre tarifaire élaboré pour chaque extrémité de graphe et comprenant une racine contenant le tarif plancher de l'extrémité ;
- l'extraction de chemins tarifaires à partir de la paire de structures de données de façon à déterminer les chemins tarifaires moins coûteux, ladite extraction de chemins tarifaires comprenant l'élaboration, pour chaque paire d'origine et de destination, un tas maintenu agencé sous la forme d'un arbre binaire et configuré pour accumuler un nombre maximum prédéterminé (k) de chemins tarifaires moins coûteux entre l'origine et la destination pendant l'extraction ;
- le renvoi en retour d'une pluralité de résultats à partir de la structure de données (220, 230) correspondant à une liste d'options de destination pouvant être atteintes à partir de l'origine (610) et de dates de réservation comprises dans la fourchette de dates (630, 640).

9. Procédé selon la revendication précédente, dans lequel l'arbre binaire du tas comprend un noeud principal dont la clé est un chemin tarifaire plus grand que les chemins tarifaires de deux noeuds secondaires correspondant au dit noeud principal et dans lequel un noeud racine contient un chemin tarifaire le plus coûteux.

10. Procédé selon la revendication précédente, dans lequel l'élaboration du tas comprend les étapes suivantes :
a - initialiser le tas avec un premier chemin tarifaire de longueur un correspondant à une connexion directe entre l'origine et la destination d'une paire d'origine et de destination,
b - déterminer une première extrémité de graphe sur le graphe de noeuds en partant de l'origine, ladite première extrémité de graphe contenant le tarif de voyage plancher à partir de l'origine ;
c - déterminer une seconde extrémité de graphe sur le graphe de noeuds en partant de la destination, ladite seconde extrémité de graphe contenant le tarif de voyage plancher à partir de la destination ;
d - élaborer un nouveau chemin tarifaire avec la première extrémité de graphe et la seconde extrémité de graphe,
e - vérifier si le nombre maximum prédéterminé (k) de chemins tarifaires moins coûteux a déjà été ajouté au tas,
f - si un nombre supérieur au nombre maximum prédéterminé (k) de chemins tarifaires moins coûteux a été accumulé dans le tas, retirer le chemin tarifaire le plus coûteux dudit tas,
g - déterminer une autre seconde extrémité de graphe de noeuds en partant de la destination, ladite seconde extrémité de graphe contenant un autre chemin tarifaire plancher à partir de la destination,
h - si un nombre inférieur au nombre maximum prédéterminé (k) de chemins tarifaires moins coûteux a été accumulé dans le tas et si la somme des valeurs de la première extrémité de graphe et de l'autre seconde extrémité de graphe est inférieure ou égale à la valeur la plus élevée des chemins tarifaires accumulés dans le tas, élaborer un nouveau chemin tarifaire avec la première extrémité de graphe et l'autre seconde extrémité de graphe,
i - répéter les étapes c à h jusqu'à ce qu'un nombre supérieur ou égal au nombre maximum prédéterminé (k) de chemins tarifaires moins coûteux ait été accumulé dans le tas et que la somme des valeurs de la première extrémité de graphe et de l'autre seconde extrémité de graphe soit supérieure à la valeur la plus élevée des chemins tarifaires accumulés dans le tas ;
j - choisir une autre première extrémité de graphe sur le graphe de noeuds en partant de l'origine, ladite autre première extrémité de graphe contenant un autre chemin tarifaire plancher à partir de l'origine ;
k - répéter les étapes c à j jusqu'à ce que : un nombre qui ne sera pas supérieur au nombre maximum prédéterminé (k) de chemins tarifaires moins coûteux ait été accumulé dans le tas et la valeur de l'autre première extrémité de graphe soit supérieure à la valeur la plus élevée des chemins tarifaires accumulés dans le tas.

11. Procédé selon l'une quelconque des revendications 8 à 10, dans lequel la demande comprend en outre au moins l'un parmi une limite budgétaire et un type de passager et la liste renvoyée en retour de résultats correspond en outre au moins à la limite budgétaire ou au type de passager.

12. Procédé selon l'une quelconque des revendications 8 à 11, comprenant en outre l'envoi d'une ou plusieurs demande(s) thématique(s) (615) aux structures de données (220, 230) et le renvoi en retour d'une pluralité de résultats correspondant en outre à la ou aux différentes demande(s) thématique(s) (615).

13. Procédé selon l'une quelconque des revendications 8 à 12, comprenant en outre la validation d'au moins une option de voyage entre une origine et au moins l'une des options de destination.

14. Programme informatique stocké sur un support de mémoire non transitoire lisible par ordinateur comprenant un code lisible par ordinateur permettant qu'au moins un ordinateur puisse utiliser le procédé selon l'une des revendications 8 à 13.
